# EUROPÄISCHE PATENTSCHRIFT

(11) **EP 2 441 104 B1**
(45) Veröffentlichungstag und Bekanntmachung des Hinweises auf die Patenterteilung: **02.08.2017**
(21) Anmeldenummer: 10722120.2
(22) Anmeldetag: 08.06.2010
(51) Int. Cl.: H01M 2/32, H01M 2/30, H01M 2/22, H01M 2/20, H01M 10/052

(54) **TRÄGERMATRIX FÜR BATTERIEZELLENVERBINDER**
CARRIER MATRIX FOR BATTERY CELL CONNECTORS
MATRICE SUPPORT POUR CONNECTEUR D'ÉLÉMENTS DE BATTERIE

(30) Priorität: 08.06.2009 DE 102009024514
(43) Veröffentlichungstag der Anmeldung: 18.04.2012
(73) Patentinhaber: Auto-Kabel Management GmbH, 79688 Hausen i.W. (DE)
(72) Erfinder: LIETZ, Franz-Josef, 46049 Oberhausen (DE); SKELE, Wera, 41751 Viersen (DE)
(74) Vertreter: Cohausz & Florack
(86) Internationale Anmeldenummer: PCT/EP2010/057962
(87) Internationale Veröffentlichungsnummer: WO 2010/142658

(56) Entgegenhaltungen:
- EP-A1- 1 077 497
- EP-A1- 1 450 422
- EP-A2- 0 825 658
- WO-A1-89/04065
- WO-A1-2007/046587
- DE-A1-102007 020 295
- GB-A- 2 083 278
- US-A1- 2009 104 516

## Beschreibung

Der Gegenstand betrifft eine Trägermatrix für Batteriezellenverbinder. Darüber hinaus betrifft der Gegenstand ein Batteriezellenmodul mit zumindest zwei Trägermatrizen und einem Satz von Batterien sowie ein Verfahren zur Herstellung eines Batteriezellenmoduls.

Batterien, insbesondere Lithium-Ionen-Batterien, jedoch auch Metall-Hydrid Batterien, wie Nickel-Metall-Hydrid Batterien, oder Lithium Polymer Batterien oder andere chemische Energiespeicher, erlangen in der Automobilindustrie einen immer höheren Stellenwert. Insbesondere durch den Bedarf an alternativen Antriebskonzepten, beispielsweise Hybridantrieben oder reinen Elektroantrieben, ist die Speicherung von elektrischer Energie von immenser Bedeutung für den zukünftigen Automobilbau.

Die Verwendung von neuartigen Batterien, z.B. Lithium-Ionen-Batterien, als elektrischer Energiespeicher für Elektromotoren im Automobilbau hat sich als vorteilhaft erwiesen. Zum Einen Speichern diese Akkumulatoren eine große Energiemenge bei kleinem Volumen und zum Anderen unterliegen solche Batterien nur bedingt einem Alterungsprozess. Insbesondere ein "Memory- Effekt" stellt sich bei diesem nicht ein. Dadurch können eine Vielzahl von Ladezyklen stattfinden, so dass die Lebensdauer der Batterien der eines Fahrzeugs im Wesentlichen entspricht.

Die meisten Batterien stellen jedoch nur geringe Spannungen zwischen einem und mehreren zehn Volt zur Verfügung. Diese geringen Spannungen reichen bei weitem nicht aus, um einen Elektromotor eines Elektrofahrzeugs anzutreiben. Darüber hinaus stellen die meisten Batterien elektrische Ladung nur zwischen 1000 und 5000 mAh zur Verfügung, was nicht ausreicht, um ein Fahrzeug ausreichend lange anzutreiben. Aus diesem Grunde werden Batterien zu sogenannten Batteriepacks zusammengeschaltet. Hierbei können eine Mehrzahl von einzelnen Batterien (Zellen) miteinander in Reihe geschaltet werden, wodurch sich die Ausgangsspannung der Batteriepacks entsprechend der Anzahl der in Reihe geschalteten Batterien multipliziert. Vorzugsweise werden Batteriepacks mit insgesamt 96 Batterien eingesetzt. Hierbei werden beispielsweise acht Module mit jeweils zwölf Batterien miteinander verschaltet. Pro Modul werden beispielsweise sechs vertikal übereinander angeordnete Batterien in einer Spalte miteinander in Serie verschaltet. Eine solche Spalte wird in Serie mit einer zweiten horizontal daneben angeordneten Spalte des selben Moduls in Serie verschaltet. Somit ergibt sich beispielsweise bei einer Ausgangsspannung von 4 V pro Batterie eine Gesamtausgangsspannung von 4 V mal 12 Batterien zu 48 V pro Modul und pro Batteriepack 384 V.

Problematisch bei dem Aufbau eines Moduls ist jedoch die Kontaktierung von jeweils zwei in Reihe zu schaltenden Batterien an ihren jeweils gegenpoligen Polen. Zum einen ist aufgrund der chemischen Energiespeicherung in den Batterien der Batteriepol einer ersten Polarität aus einem anderen Metall als der Batteriepol einer zweiten Polarität der selben Batterie. Beispielsweise ist bei Lithium-Ionen-Batterien ein Batteriepol aus Stahl und ein zweiter Batteriepol aus Aluminium. Andere Kombinationen von Metallen sind jedoch auch üblich. Bei den meisten Arten von Batterien ist zu beobachten, dass die Pole unterschiedlicher Polarität aus unterschiedlichen Metallen hergestellt sind.

Darüber hinaus ist durch produktionsbedingte Schwankungen bei der Produktion von Batterien der Abstand zwischen zwei gegenüberliegenden Polen toleranzbehaftet. Das heißt, dass wenn zwei Batterien nebeneinander im Wesentlichen in einer Ebene angeordnet sind, die Pole nicht exakt koplanar sein können. Auch ist häufig der Pluspol einer Batterie durch einen Vorsprung auf dem einen Batteriedeckel gebildet und der Minuspol durch einen Rücksprung auf dem gegenüberliegenden Deckel der Batterie. Will man nun einen Pluspol einer ersten Batterie mit einem Minuspol einer zweiten Batterie verbinden, so muss zum Einen der Verwendung der unterschiedlichen Metalle Rechnung getragen werden und zum Anderen der toleranzbedingten Abweichung der Pole zueinander.

Darüber hinaus ist der Stromfluss durch die Kontakte sehr hoch, da eine Vielzahl von Batterien in Reihe geschaltet werden, welche im Belastungsfall mehrere Ampere, eventuell sogar mehrere zehn Ampere oder mehrere einhundert Ampere, zur Verfügung stellen. Diese hohen Ströme müssen durch alle Batterien und die jeweiligen Batteriezellenverbinder fließen. Die elektrischen Kontaktierungen der Batteriepole an die Batteriezellenverbinder müssen daher niederohmig sein, um die Verlustwärme in den Verbindern zu minimieren. Daher muss eine saubere elektrische Kontaktierung über die gesamte Lebensdauer des Batteriemoduls gewährleistet werden. Um dies zu gewährleisten, werden die Batteriezellenverbinder regelmäßig mit den Batteriepolen stoffschlüssig verbunden.

Bei den bekannten Batteriemodulen ergibt sich nunmehr das Problem, einen geringen Übergangswiderstand zwischen einem Batteriepol und einem Batteriezellenverbinder unter Berücksichtigung der verschiedenen Metalle der Batteriepole zu bei einer maschinellen Herstellung etablieren. Darüber hinaus ergibt sich das Problem, Toleranzen der Batterielängen automatisch auszugleichen. Auch ergibt sich das Problem, eine Vielzahl von Batterien in einem einfach handhabbaren Arbeitsschritt elektrisch und stoffschlüssig miteinander zu kontaktieren.

Aus der DE 10 2007 020 295 A1 ist ein Verbindungsmittel zum elektrischen Verbinden mehrerer Batteriezellen bekannt, das einen verschiedene Leitungsabschnitte aufweisenden Leiterrahmen umfasst. Nachteilig an dem beschriebenen Leiterrahmen ist jedoch, dass die verschiedenen Leitungsabschnitte fest in den Kunststoffrahmen eingebettet und der Kunststoffrahmen somit nicht mehr schnell und maschinell mit Leitungsabschnitten bestückbar ist.

Aus der US 2009/104516 A1 ist zudem ein Batteriemodul umfassend eine Trägermatrix bekannt. Die Trägermatrix dient zur Aufnahme von Teilbatteriezellenverbindern, welche wiederum zur Verschaltung der Batteriezellen vorgesehen sind. Nachteilig an der beschriebenen Trägermatrix ist, dass die in der Trägermatrix angeordneten Teilbatteriezellenverbinder jeweils nur mit einer Batterie verbunden sind.

Die eingangs erläuterten Probleme sowie die bekannten Nachteile aus dem Stand der Technik werden gegenständlich durch eine Trägermatrix für Batteriezellenverbinder nach Anspruch 1 gelöst.

Es ist erkannt worden, dass eine industrielle Fertigung von Batteriezellenmodulen nur durch eine schnelle und fehlerfreie serielle elektrische Kontaktierung von mehreren Batterien untereinander möglich ist. Hierzu müssen stoffschlüssige Verbindungen zwischen Batteriezellenverbindern und gegenpoligen Polen von Batterien mit hohen Taktraten zur Verfügung gestellt werden. Mittels der gegenständlichen Trägermatrix können Batteriezellenverbinder bereits in ihren hierfür vorgesehenen Positionen in der Trägermatrix fixiert werden, um anschließend mittels stoffschlüssiger Verbindungsverfahren mit den Batteriepolen verbunden zu werden. Insbesondere ist aufgrund von Toleranzen im Bereich der Breiten der Batterien ein Toleranzbereich zu überbrücken, in dem eine stoffschlüssige Verbindung zwischen jeweils einem Anschlussteil und einem Flachstück eines Batteriezellenverbinders mit einem Batteriepol möglich sein muss.

Bei der industriellen Fertigung müssen viele Batterien in einem einzigen Arbeitsschritt elektrisch in Serie geschaltet werden. Mittels der gegenständlichen Trägermatrix kann dies dadurch geschehen, dass eine Mehrzahl von Batteriezellenverbindern an die entsprechenden Batteriepole herangeführt werden, die Batteriezellenverbinder gegen die Pole mit einem geeigneten Werkzeug gedrückt werden, und unmittelbar im Anschluss daran ein Schweißwerkzeug, beispielsweise ein Laserschweißwerkzeug, die Batteriepole mit den entsprechenden Batteriezellenverbindern stoffschlüssig verbindet.

Mit der gegenständlichen Trägermatrix ist es möglich, zumindest jeweils drei in einer Spalte angeordnete Batterien und zwei nebeneinander angeordnete Spalten zu verbinden. Mittels der Vertikalaufnahmen können die Batteriezellenverbinder zum Verbinden von zwei übereinander angeordneten Batterien aufgenommen werden. Die jeweils letzten Batterien in einer Spalte können mittels eines Batteriezellenverbinders, der in einer Horizontalaufnahme angeordnet ist, verbunden werden. Die Horizontalaufnahme und die Vertikalaufnahme können gegenständlich orthogonal zueinander sein. Durch die Verwendung der Bezeichnung horizontal und vertikal soll die räumliche Ausrichtung der Aufnahmen zueinander zum Ausdruck kommen. Es ist nicht zwingend notwendig, dass die Vertikalaufnahme im Lot ist, und dass die Horizontalaufnahme waagerecht ist. Vielmehr ist gegenständlich, dass die Horizontalaufnahme im Wesentlichen normal zur Vertikalaufnahme ist.

Im Übrigen sei darauf hingewiesen, dass im Rahmen der Beschreibung mit dem Begriff der Vertikalaufnahme eine erste Aufnahme und mit dem Begriff einer Horizontalaufnahme eine zweite Aufnahme gemäß der Formulierung des Anspruchs 1 gemeint ist. Ebenso ist mit dem Begriff vertikal eine erste und mit dem Begriff horizontal einer zweite Richtung gemeint.

Mittels eines vorteilhaften Ausführungsbeispiels wird vorgeschlagen, dass in dem Träger zwischen den Spalten eine Leiterplattenaufnahme für eine Leiterplatte geformt ist. Diese Leiterplattenaufnahme kann gegenständlich eine Leiterplatte aufnehmen, von der Abgriffe abzweigen, die mit Verbindungsbereichen jeweils eines Batteriezellenverbinders verbindbar ist. Über diese Abgriffe kann auf der Leiterplatte die Temperatur des jeweiligen Batteriezellenverbinders gemessen werden. Mittels eines Ausführungsbeispiels wird vorgeschlagen, dass die Horizontalaufnahme und/oder die Vertikalaufnahme zur flächenbündigen Aufnahme eines Batteriezellenverbinders geformt sind. Hierbei kann der Batteriezellenverbinder zumindest auf der der Batterie zugewandten Seite flächenbündig mit der der Batterie zugewandten Seite des Trägers sein.

Für eine sortenreine Verbindung von Batteriepolen unterschiedlicher Polarität kann der Batteriezellenverbinder zum Anschluss an die jeweiligen Pole mit einem Anschlussteil und einem Flachstück geformt sein. Gemäß eines vorteilhaften Ausführungsbeispiels wird vorgeschlagen, dass die Horizontalaufnahme und/oder die Vertikalaufnahme derart geformt sind, dass auf einer einer Batterie zugewandten Seite des Trägers ein Batteriezellenverbinder mit einem Flachstück und einem ersten Anschlussteil flächenbündig mit der der Batterie zugewandten Seite des Trägers ist. Somit ist auf der der Batterie zugewandten Seite des Trägers in einer Vertikalaufnahme und/oder einer Horizontalaufnahme ein Batteriezellenverbinder derart angeordnet, dass pro Batteriezellenverbinder ein Flachstück und ein Anschlussteil in Richtung der Batterie zeigt.

Gemäß eines vorteilhaften Ausführungsbeispiels wird vorgeschlagen, dass die Horizontalaufnahme und/oder die Vertikalaufnahme Rastnasen zur formschlüssigen Befestigung der Batteriezellenverbinder aufweisen. Beispielsweise ist es möglich, dass die Batteriezellenverbinder von der der Batterie zugewandten Seite in den Träger eingesteckt werden. Hierbei werden die Batteriezellenverbinder über die Rastnasen in die Aufnahmen "geclipst". Durch leichten Druck auf die Batteriezellenverbinder biegen sich die Rastnasen, welche auf der der Batterie zugewandten Seite des Trägers angeordnet sein können, nach außen, so dass die Batteriezellenverbinder in die Aufnahmen gelangen und dort verrasten. Hierdurch kann schnell und maschinell ein Träger mit Batteriezellenverbindern bestückt werden. Durch die Rastnasen wird verhindert, dass die Batteriezellenverbinder aus dem Träger vor der stoffschlüssigen Verbindung mit den Batteriepolen fallen. Außerdem kann nach dem Verbinden mit den Batteriepolen der Träger aufgrund der Rastnasen nur noch unter Aufwendung der die von den Rastnasen aufgebrachten Kräften von dem Batteriemodul abgezogen werden.

Gemäß eines vorteilhaften Ausführungsbeispiels wird auch vorgeschlagen, dass die Horizontalaufnahme und/oder die Vertikalaufnahme auf den den Rastnasen abgewandten Seiten Halteschultern als Gegenlager zur Aufnahme des Batteriezellenverbinders aufweisen. Die Batteriezellenverbinder weisen ein erstes Anschlussteil, einen Versatz und ein zweites Anschlussteil mit einem daran angeordneten Flachstück auf. Auf der der Batterie abgewandten Seite bzw. auf der den Rastnasen abgewandten Seite kann beispielsweise eine Halteschulter im Bereich des zweiten Anschlussteils derart vorgesehen sein, dass der nicht vom Flachstück abgedeckte Bereich des zweiten Anschlussteils auf der Halteschulter aufliegt. Auch kann im Bereich des Verbindungsteils eine Halteschulter vorgesehen sein. Schließlich kann im Bereich des ersten Anschlussteils eine Halteschulter zur Befestigung des ersten Anschlussteils vorgesehen sein.

Gemäß eines vorteilhaften Ausführungsbeispiels ist der Träger aus Polyamid geformt. Vorzugsweise ist ein PA6-Kunststoff verwendet.

Gemäß eines vorteilhaften Ausführungsbeispiels wird vorgeschlagen, dass der Träger Ausnehmungen zwischen der Horizontalaufnahme und/oder der Vertikalaufnahme und der Leiterplattenaufnahme im Bereich von Verbindungsbereichen der Batteriezellenverbinder aufweist. Über diese Ausnehmungen kann eine elektrische Verbindung zwischen der Leiterplatte und dem Batteriezellenverbinder, insbesondere dem Verbindungsbereich des Batteriezellenverbinders erfolgen. Hierüber ist eine Temperatursensierung auf dem Batteriezellenverbinder mittels eines auf der Leiterplatte angeordneten Sensors pro Batteriezellenverbinder möglich.

Gemäß eines vorteilhaften Ausführungsbeispiels wird auch vorgeschlagen, dass in den Ausnehmungen elektrische Verbindungsleiter zwischen der Leiterplatte und den Verbindungsbereichen geführt sind.

Es wird auch vorgeschlagen, dass in dem Träger zwei horizontal nebeneinander angeordnete Schwertaufnahmen auf der der Horizontalaufnahme gegenüberliegenden Seite des Trägers angeordnet sind. In einem Modul sind beispielsweise zwölf Batterien mit Hilfe von zwei Trägermatrizen in Reihe geschaltet. Zum Abgriff der Spannung über diese zwölf Batterien sind an den Enden jeweils zwei horizontal nebeneinander angeordnete Kontakte vorgesehen, welche jeweils mit den Polen der ihnen zugeordneten Batterien verbunden sind. Über Schwerter können die so abgegriffenen Spannungen aus der Fläche der Trägermatrix herausgeführt werden und sind dort abgreifbar. Hierdurch können mehrere Module miteinander mittels Modulverbinder elektrisch verbunden werden.

Gemäß eines vorteilhaften Ausführungsbeispiels wird vorgeschlagen, dass die Schwertaufnahmen Ausnehmungen zum Aufnehmen von aus der Fläche des Trägers herausragenden Schwerter aufweisen. Über die Schwerter können mittels Stecker die dort anliegenden Spannungen abgegriffen werden.

Gemäß eines vorteilhaften Ausführungsbeispiels wird auch vorgeschlagen, dass auf der den Batterien zugewandten Seite zwei Führungen an dem Träger befestigt sind. Die Batterien können beispielsweise mit sechs Stück pro Spalte und zwei Spalten nebeneinander als Palette in einem Fertigungsschritt an die Trägermatrix herangeführt werden. Um Batterien lagerichtig zu den Batteriezellenverbindern an der Trägermatrix ausrichten zu können, wird vorgeschlagen, Führungen an dem Träger zu befestigen. Pro Batteriezellenverbinder werden, wie oben beschrieben, ein Pluspol und ein Minuspol der Batterie miteinander in Reihe geschaltet. Diese zwei Batterien können mittels der Führungen lagerichtig an die Batteriezellenverbinder, respektive das erste Anschlussteil und das Flachstück, geführt werden. Somit können die Batteriepole im Wesentlichen koaxial zu den Entlüftungsöffnungen der Batteriezellenverbinder geführt werden und können somit einfach mittels eines Lasers verschweißt werden.

Bei der Verwendung von zylindrischen Batterien wird vorgeschlagen, dass auch die Führungen zumindest teilweise zylindrische Mantelflächen aufweisen.

Gemäß eines vorteilhaften Ausführungsbeispiels wird auch vorgeschlagen, dass die Führungen einstückig sind und mit dem Träger formschlüssig verbindbar sind oder aus dem Träger geformt sind. Beispielsweise ist es möglich, eine zweite Matrix aus Führungen zu formen, welche ebenfalls mittels "Clipse" an der Trägermatrix formschlüssig verbindbar sind. Sowohl die Trägermatrix als auch die Matrix der Führungen können Spritzgussteile sein, welche in Massenfertigung hergestellt werden.

Wie bereits beschrieben, werden die Batterien pro Modul in Reihe geschaltet. Aus diesem Grunde wird vorgeschlagen, dass jeweils zwei in nebeneinander liegenden Spalten angeordnete Vertikalaufnahmen alternierend geformt sind, wobei ein oberer Bereich einer ersten Vertikalaufnahme zur Aufnahme eines Anschlussteils geformt ist und ein unterer Bereich der ersten Vertikalaufnahme zur Aufnahme eines Flachstücks geformt ist, und ein oberer Bereich einer zweiten Vertikalaufnahme zur Aufnahme eines Flachstücks geformt ist, und ein unterer Bereich der zweiten Vertikalaufnahme zur Aufnahme eines Anschlussteils geformt ist. Somit sind jeweils zwei nebeneinander angeordnete Batteriezellenverbinder alternierend in der Trägermatrix angeordnet.

Ein Batteriezellenverbinder kann gebildet sein aus einem ersten zum Anschluss an einen Batteriepol einer ersten Batterie gebildeten Anschlussteil, einem zweiten Anschlussteil, und einem zwischen den Anschlussteilen angeordneten, die Anschlussteile elektrisch miteinander kontaktierenden Verbindungsteil, wobei das erste Anschlussteil zumindest an der einem Batteriepol zugewandten Seite aus einem ersten elektrisch leitenden Material gebildet ist und dass an dem zweiten Anschlussteil ein zum Anschluss an einen zweiten Batteriepol gebildetes, zumindest an der dem zweiten Batteriepol zugewandten Seite aus einem zweiten von dem ersten elektrisch leitenden Material verschiedenen elektrisch leitenden Material gebildetes Flachstück stoffschlüssig angeordnet ist.

Verbindungen zwischen Batteriezellenverbindern und Batteriepolen sind dann mit einem geringen Übergangswiderstand möglich, wenn den unterschiedlichen Materialien der gegenpoligen Batteriepole Rechnung getragen wird. Hierzu kann sortenreiner Übergang zwischen Zellenverbinder und Batteriepol gewählt werden. Ein erstes Anschlussteil, welches mit einem ersten Batteriepol verbunden wird, kann aus einem ersten elektrisch leitenden Material gebildet sein. Der Batteriezellenverbinder verbindet das erste Anschlussteil über das Verbindungsteil mit dem zweiten Anschlussteil. An dem zweiten Anschlussteil soll elektrisch ein zum ersten Batteriepol gegenpoliger Pol einer zweiten Batterie angeschlossen werden. Da dieser gegenpolige Batteriepol aus einem anderen Material ist als der erste Batteriepol, muss auch das in elektrischem und mechanischem Kontakt mit diesem Pol tretende Material ein anderes sein, um einen geringen Übergangswiderstand zu gewährleisten.

Um einen kostengünstigen Batteriezellenverbinder zur Verfügung zu stellen, wird daher vorgeschlagen, dass an dem zweiten Anschlussteil ein Flachstück stoffschlüssig angeordnet ist. Das Flachstück ist dabei aus einem zweiten elektrisch leitenden Material. Bevorzugt ist das erste Anschlussteil aus demselben Material wie der erste Batteriepol der ersten Batterie und das Flachstück aus demselben Material wie der zweite Batteriepol der zweiten Batterie.

Beispielhaft kann der erste Batteriepol aus Aluminium gebildet sein. In diesem Fall kann zumindest die Oberfläche des ersten Anschlussteils ebenfalls aus Aluminium gebildet sein. Der gegenpolige Pol der zweiten Batterie kann beispielsweise aus Stahl gebildet sein. In diesem Fall kann das Flachstück zumindest an der Oberfläche aus Stahl gebildet sein. Über das Verbindungsteil ist der erste Anschlussteil mit dem zweiten Anschlussteil und respektive dem Flachstück elektrisch verbunden, und Strom kann über den Batteriezellenverbinder zwischen den Batteriepolen der zwei Batterien fließen.

Gemäß eines vorteilhaften Ausführungsbeispiels wird vorgeschlagen, dass die der Batterie zugewandte Fläche des Flachstücks mit dem ersten Anschlussteil koplanar ist. In einem Batteriemodul werden die Batterien vorzugsweise derart angeordnet, dass die gegenpoligen Pole von nebeneinander angeordneten Batterien im Wesentlichen in einer Ebene angeordnet sind. Um nun diese im Wesentlichen in einer Ebene liegenden Pole miteinander zu verbinden, sind die Flächen des Flachstücks und des ersten Anschlussteils koplanar.

Es sei erwähnt, dass diese Koplanarität durch eine Flexibilität des Verbindungsteils beim Kontaktieren aufgehoben werden kann. Beispielsweise kann der Batteriezellenverbinder mit einem Werkzeug gegen die Batteriepole beim stoffschlüssigen Verbinden des Anschlussteils und des Flachstücks an die jeweiligen Batteriepole gedrückt werden. Hierdurch können toleranzbedingte Abweichungen zwischen den Polen ausgeglichen werden, insbesondere kann der Batteriezellenverbinder in einem Toleranzbereich verschoben werden.

Gemäß eines vorteilhaften Ausführungsbeispiels wird vorgeschlagen, dass das erste und/oder das zweite Anschlussteil als Flachteil gebildet ist. Darüber hinaus kann auch das Flachstück als Flachteil gebildet sein. Durch die Ausgestaltung als Flachteil können die Anschlussteile bei geringem Raumbedarf eng an den Enden der Batterien angeordnet werden.

Gemäß eines vorteilhaften Ausführungsbeispiels wird auch vorgeschlagen, dass das Verbindungsteil einstückig mit dem ersten und/oder dem zweiten Anschlussteil gebildet ist. Dadurch ist es möglich, besonders kostengünstig den Batteriezellenverbinder herzustellen. Beispielsweise kann das erste Anschlussteil, das zweite Anschlussteil und das Verbindungsteil aus demselben Material gebildet werden. Beispielsweise kann das erste Anschlussteil, das Verbindungsteil und das Anschlussteil aus einem Blech oder einem Band gestanzt werden. Dadurch können in einem einzigen Arbeitsschritt erstes und zweites Anschlussteil und Verbindungsteil kostengünstig hergestellt werden.

Gemäß eines vorteilhaften Ausführungsbeispiels wird vorgeschlagen, dass zumindest ein Anschlussteil aus Aluminium, Zinn, Zink, Kupfer, Nickel, Silber, Gold, Eisen, Stahl oder Legierungen davon gebildet oder damit beschichtet ist. Anschlussteile können aus Vollmaterial aus einem der genannten Metalle oder Legierungen davon hergestellt sein. Auch ist es möglich, dass die Anschlussteile aus einem ersten Metall gebildet sind und mit einem zweiten Metall oder Legierungen beschichtet sind. Insbesondere um eine gute elektrische Kontaktierung zu gewährleisten, kann beispielsweise eine Silberbeschichtung vorgesehen sein. Jedoch muss bei Auswahl des Materials am Anschlussteilmantel darauf geachtet werden, dass dieses Material zu dem Material des daran anzuschließenden Batteriepols korrespondiert, so dass keine galvanische Zelle am Übergang entsteht, welche die stoffschlüssige Verbindung zerstören könnte oder einen zu hohen Übergangswiderstand aufweist.

Gemäß eines vorteilhaften Ausführungsbeispiels wird vorgeschlagen, dass das Flachstück aus Stahl, Zinn, Zink, Kupfer, Nickel, Eisen, Aluminium, Silber, Gold oder Legierungen davon gebildet oder damit beschichtet ist. Entsprechend der Ausgestaltung der Anschlussteile kann auch das Flachstück entweder aus einem Vollmaterial sein oder mit einem geeigneten Metall beschichtet sein.

Gemäß eines vorteilhaften Ausführungsbeispiels wird vorgeschlagen, dass das Flachstück mit dem zweiten Anschlussteil verschweißt ist. Hierbei kann ein Reibschweißverfahren verwendet werden. Beispielsweise kann ein Ultraschallschweißverfahren zur Kontaktierung des Flachstücks mit dem Anschlussteil verwendet werden. Jedoch ist auch ein Rührreibschweißen, ein torsionales Reibschweißen, ein Rotationsreibschweißen oder ein sonstiges Reibschweißverfahren denkbar. Auch kann ein Multi-Orbital-Reibschweißverfahren verwendet werden. Darüber hinaus kann das Flachstück mit dem Anschlussteil auch mittels eines Widerstandsschweißverfahrens stoffschlüssig verbunden werden.

Für einen Toleranzausgleich zwischen dem Flachstück und dem ersten Anschlussteil bei Anordnung der zu verbindenden Batteriepole in unterschiedlichen Ebenen wird vorgeschlagen, dass das Verbindungsteil flexibel ausgestaltet ist.

Eine solche Flexibilität kann beispielsweise dadurch erreicht werden, dass das Verbindungsteil voneinander beabstandete Rippen aufweist. Hierbei können eine Mehrzahl von einzelnen Rippen als Verbindungsstege zwischen den Anschlussteilen gebildet sein. Die einzelnen Rippen sind voneinander beabstandet und haben einen Zwischenraum. Hierdurch wird eine erhöhte Flexibilität des Verbindungsteils erreicht.

Insbesondere eine Verwendung von wellenförmigen Rippen in dem Verbindungsteil gemäß eines vorteilhaften Ausführungsbeispiels gewährleistet die benötigte Flexibilität zwischen den Anschlussteilen durch das Verbindungsteil.

Gemäß eines vorteilhaften Ausführungsbeispiels wird vorgeschlagen, dass die Rippen koplanar zumindest zu der der Batterie abgewandten Seite des ersten Anschlussteils und/oder des zweiten Anschlussteils sind. Hierbei verlaufen die Rippen in der gleichen Ebene wie das erste und/oder das zweite Anschlussteil.

Gemäß eines vorteilhaften Ausführungsbeispiels wird auch vorgeschlagen, dass die Rippen aus der Ebene zumindest eines Anschlussteils herausragend geformt sind. Die Rippen können beispielsweise einerseits in der Ebene eines Anschlussteils wellenförmig geformt sein, so dass die Rippen aus der Ebene des Anschlussteils nicht herausragen. Jedoch ist es auch möglich, dass die Rippen aus einer Ebene eines Anschlussteils herausragen, beispielsweise nach oben und nach unten. Beide Rippenformen bieten die benötigte Flexibilität, wobei die Rippen, die aus der Ebene der Anschlussteile herausragen, eine erhöhte Flexibilität normal zur Ebene eines Anschlussteils gewährleisten, und Rippen, die in der Ebene der Anschlussteile verlaufen, eine erhöhte Flexibilität in der Ebene eines Anschlussteils gewährleisten können.

Gemäß eines vorteilhaften Ausführungsbeispiels wird auch vorgeschlagen, dass die Rippen mittels eines der Verfahren Stanzen, Schneiden, Laserschneiden, Wasserstrahlschneiden aus dem Verbindungsteil geformt sind. Wie zuvor erläutert, kann das Verbindungsteil mit den beiden Anschlussteilen aus einem Blech oder Band gestanzt werden. Gleichzeitig können beispielsweise die Rippen gestanzt werden. Auch ist es möglich, dass die Rippen aus dem Verbindungsteil geschnitten werden, derart, dass die Abstände zwischen den Rippen in dem Verbindungsteil geformt werden.

Gemäß eines vorteilhaften Ausführungsbeispiels wird auch vorgeschlagen, dass das Verbindungsteil aus zumindest zwei Folien, insbesondere Metallfolien oder beschichtete Folien, gebildet ist. Zwei oder mehr Folien, beispielsweise auch zehn Folien, können übereinander gelagert werden und das Verbindungsteil bilden. An den jeweiligen Enden der Folien können diese mit den Anschlussteilen stoffschlüssig verbunden sein, so dass ein Stromfluss vom einen Anschlussteil über die Folien zum anderen Anschlussteil möglich ist. Die Folien bieten den Vorteil, dass diese eine erhöhte Flexibilität gewährleisten und einfach anzubringen sind.

Gemäß eines vorteilhaften Ausführungsbeispiels wird auch vorgeschlagen, dass das Verbindungsteil aus einem der Materialien Aluminiumlitzen, Kupferlitzen, Aluminiumgeflecht, oder Kupfergeflecht gebildet ist. Neben der Verwendung von Folien können auch eine Vielzahl von Litzen oder Geflechte als Verbindungsteil verwendet werden. Diese Litzen oder Geflechte können an ihren jeweiligen Enden stoffschlüssig mit den Anschlussteilen verbunden werden.

Für eine stoffschlüssige Verbindung der Litzen, Geflechte oder Folien an den Anschlussteilen wird vorgeschlagen, dass das Verbindungsteil zumindest teilweise im Bereich eines Anschlussteils kompaktiert ist. Kompaktieren kann bedeuten, dass die einzelnen Schichten oder Litzen derart verpresst sind, dass diese im Wesentlichen keinen Luftzwischenraum aufweisen. Kompaktieren kann beispielsweise durch kurzzeitiges Verpressen und Erhitzen erreicht werden. Kompaktierte Folien, kompaktierte Litzen bzw. kompaktierte Geflechte lassen sich mit einem Werkzeug in besonders einfacher Weise stoffschlüssig mit den Anschlussteilen verbinden. Insbesondere ein Reibschweißverfahren, ein Widerstandsschweißverfahren oder ein Ultraschallschweißverfahren kann bei Kompaktierung der Enden des Verbindungsteils im Bereich der Anschlussteile angewandt werden.

Gemäß eines vorteilhaften Ausführungsbeispiels wird vorgeschlagen, dass das Verbindungsteil zumindest teilweise im Bereich zumindest eines Anschlussteils stoffschlüssig mit dem Anschlussteil verbunden ist. Diese stoffschlüssige Verbindung kann, wie zuvor erläutert, mittels Schweißen erzielt werden. Durch die stoffschlüssige Verbindung wird erreicht, dass der Übergangswiderstand zwischen Anschlussteil und Verbindungsteil gering ist und somit eine Wärmeentwicklung durch Verlustleistung minimiert wird.

Gemäß eines vorteilhaften Ausführungsbeispiels wird auch vorgeschlagen, dass das Verbindungsteil, das erste Anschlussteil und/oder das zweite Anschlussteil einen Versatz zwischen einer Ebene des ersten Anschlussteils und einer Ebene des zweiten Anschlussteils bildet. Wie zuvor erläutert, wird an dem zweiten Anschlussteil ein Flachstück angeordnet. Um die der Batterie zugewandte Fläche des Flachstücks im Wesentlichen in eine Ebene mit der der Batterie zugewandten Fläche des ersten Anschlussteils zu bringen, wird der Versatz vorgeschlagen.

Gemäß eines vorteilhaften Ausführungsbeispiels wird vorgeschlagen, dass der Versatz derart ist, dass die der Batterie zugewandte Fläche des ersten Anschlussteils koplanar zu der der Batterie zugewandten Fläche des Flachstücks ist.

Diese Koplanarität ermöglicht es, die zu verbindenden Batteriepole mit einem Werkzeug besonders einfach stoffschlüssig mit dem Batteriezellenverbinder zu verbinden.

Die Verbindung zwischen dem Batteriezellenverbinder und dem jeweiligen Batteriepol kann beispielsweise mittels eines Laserschweißverfahrens erfolgen. Beim Laserschweißen ist es jedoch notwendig, dass bereits zu Beginn des Schweißvorgangs ein mechanischer Kontakt zwischen den zu fügenden Bauteilen besteht. Daher wird bevorzugt das erste Anschlussteil gegen einen Pol einer ersten Batterie gedrückt und das Flachstück gegen einen gegenpoligen Pol einer zweiten Batterie gedrückt. Die so mechanisch in Kontakt gebrachten Teile werden dann mittels eines Lasers verschweißt.

Bei Batteriemodulen, wie sie zuvor beschrieben wurden, ist die Temperatur der jeweiligen Batterien in einem bestimmten Temperaturfenster einzuhalten. Erhitzt sich eine Batterie zu sehr, besteht die Gefahr, dass diese Batterie zerstört wird oder schlimmstenfalls explodiert. Wenn dies geschieht, ist das ganze Batteriemodul zerstört. Daher sollte jede einzelne Batterie hinsichtlich ihrer Temperatur überwacht werden. Um dies zu ermöglichen, wird vorgeschlagen, dass das erste Anschlussteil einen aus einem dritten elektrisch leitenden Material gebildeten Verbindungsbereich auf der der Batterie abgewandten Seite aufweist. Der Verbindungsbereich kann auch an dem zweiten Anschlussteil oder dem Verbindungsteil angeordnet sein. An diesem Verbindungsbereich kann ein Verbindungsdraht einer Leiterplatte verbunden werden, beispielsweise verlötet werden. Über diesen Verbindungsdraht ist ein Temperaturabgriff auf dem Batteriezellenverbinder möglich. Somit kann mit Hilfe des Verbindungsbereichs die Temperatur des Batteriezellenverbinders und somit respektive die Temperatur der einzelnen Batterien überwacht werden. Eine getrennte Überwachung jedes einzelnen Paars von Batterien ist möglich, und ein Ansteigen der Temperatur über einen Grenzwert ist detektierbar, woraufhin das Modul abgeschaltet werden kann.

Gemäß eines vorteilhaften Ausführungsbeispiels wird auch vorgeschlagen, dass der Verbindungsbereich flächenbündig mit der der Batterie abgewandten Fläche des ersten oder zweiten Anschlussteils oder Verbindungsteils ist. Somit ist der Bauraum des Batteriezellenverbinders minimiert.

Gemäß eines vorteilhaften Ausführungsbeispiels kann der Verbindungsbereich mit dem dritten Metall beschichtet sein. Die Beschichtung mit dem dritten Metall kann vor, während oder nach dem Formen der Anschlussteile und des Verbindungsteils erfolgen.

Auch ist es möglich, dass der Verbindungsbereich mit dem dritten Metall walzplattiert ist. Hierbei kann der Verbindungsbereich bzw. das dritte Metall auf dem ersten Anschlussteil oder dem zweiten Anschlussteil oder dem Verbindungsteil walzplattiert werden.

Gemäß eines vorteilhaften Ausführungsbeispiels ist der Verbindungsbereich aus einem der Metalle Kupfer, Nickel, Zinn, Zink, Silber, Gold oder Legierungen davon gebildet. Auch ist eine Beschichtung des Verbindungsbereichs mit einem Metall oder einer Legierung möglich.

Gemäß eines vorteilhaften Ausführungsbeispiels wird auch vorgeschlagen, dass in zumindest einem Anschlussteil eine Entlüftungsöffnung für die Batterie angeordnet ist. Insbesondere Lithium-Ionen-Batterien, jedoch auch andere chemische Energiespeicher, müssen "atmen" können. Hierzu ist eine Entlüftungsöffnung an zumindest einem der Pole, bevorzugt jedoch an jedem der beiden Pole der Batterie, notwendig. Wenn nun, wie vorgeschlagen, das Flachstück und das erste Anschlussteil stoffschlüssig mit dem Pol verbunden sind, ist für eine Entlüftung der bereits an dem Pol angeordneten Entlüftungsöffnung zu sorgen. Diese Entlüftung wird durch die Entlüftungsöffnung in dem Anschlussteil und/oder dem Flachstück ermöglicht. Die Entlüftungsöffnung kann auch dazu genutzt werden, dass ein Anschlussteil mit dem entsprechenden Pol der Batterie mittels Laserschweißen verschweißt wird. Hierzu wird der Laserstrahl entlang des Innenumfangs der Öffnung geführt, wobei sich das Anschlussteil mit dem Batteriepol entlang der Schweißnaht stoffschlüssig verbindet. Die Entlüftungsöffnung kann somit auch ohne die Verwendung für eine Entlüftung der Batterie genutzt werden.

Gemäß eines vorteilhaften Ausführungsbeispiels ist die Entlüftungsöffnung rund.

Auch wird vorgeschlagen, dass die Entlüftungsöffnung einen ihren Durchmesser durchbrechenden Vorsprung aufweist. Hierbei kann beispielsweise die Entlüftungsöffnung zunächst als Bohrung oder sonstige runde Öffnung geformt werden und daran anschließend eine hieraus herausragende Nase aus dem Anschlussteil bzw. dem Flachstück herausgenommen werden. Die Entlüftungsöffnung mit dem aus dem Umfang herausgenommenen Versatz bzw. Vorsprung kann auch beim Formen der Anschlussteile oder des Flachstücks, beispielsweise beim Stanzen, gebildet werden.

Um das Anschlussteil bzw. das Flachstück mit dem Batteriepol stoffschlüssig zu verbinden, wird vorgeschlagen, dass ein Durchmesser der Entlüftungsöffnung kleiner als ein Batteriepol ist. Somit ist es möglich, dass das Anschlussteil bzw. das Flachstück auf den Batteriepol gedrückt werden kann und ein mechanischer Kontakt zwischen Anschlussteil bzw. Flachstück und Batteriepol gewährleistet ist, ohne dass der Pol durch die Entlüftungsöffnung gedrückt wird. Durch die Entlüftungsöffnung hindurch kann dann beispielsweise mit einem Laser im Bereich der Umfangsfläche der Entlüftungsöffnung die stoffschlüssige Verbindung zwischen Batteriepol und Batteriezellenverbinder hergestellt werden.

Gemäß eines vorteilhaften Ausführungsbeispiels wird daher vorgeschlagen, dass eine Batterie bzw. ein Batteriepol zumindest teilweise entlang des Außenumfangs der Entlüftungsöffnung stoffschlüssig mit dem ersten Anschlussteil verbunden ist. Diese stoffschlüssige Verbindung kann beispielsweise mittels Laserschweißen erfolgen. Auch ist ein Reibschweißen oder ein Ultraschallschweißen möglich.

Wie bereits zuvor erläutert, kann das Flachstück als auch das Anschlussteil eine Entlüftungsöffnung aufweisen. Um die Entlüftung durch das Anschlussteil und das Flachstück zu gewährleisten, wird vorgeschlagen, dass das Flachstück eine Öffnung koaxial zu einer Entlüftungsöffnung in dem zweiten Anschlussteil aufweist. Somit durchgreift die Entlüftungsöffnung sowohl das Flachstück als auch das zweite Anschlussteil.

Gemäß eines vorteilhaften Ausführungsbeispiels wird auch vorgeschlagen, dass eine Batterie zumindest teilweise entlang des Außenumfangs der Öffnung stoffschlüssig mit dem Flachstück verbunden ist. Wie bereits zuvor für das Anschlussteil erläutert, kann die Batterie bzw. der Batteriepol mittels eines Schweißverfahrens stoffschlüssig mit dem Flachstück verbunden werden. Durch diese stoffschlüssige Verbindung ist der Übergangswiderstand zwischen Batteriezellenverbinder und den jeweiligen Batteriepolen gering, so dass eine Verlustleistung in dem Übergang gering ist und eine Wärmeentwicklung weitestgehend vermieden bzw. reduziert wird.

Gemäß eines vorteilhaften Ausführungsbeispiels wird auch vorgeschlagen, dass die Entlüftungsöffnung des zweiten Anschlussteils größer als die Entlüftungsöffnung des ersten Anschlussteils ist, und dass die Größe der Öffnung des Flachstücks der Größe der Entlüftungsöffnung des ersten Anschlussteils entspricht. Somit sind die Öffnung des Flachstücks und die Entlüftungsöffnung des ersten Anschlussteils einander entsprechend, insbesondere so groß, dass ihr Außendurchmesser geringer ist als die Größe eines Pols einer Batterie. In dem zweiten Anschlussteil kann eine größere Öffnung vorgesehen sein, die koaxial mit der Öffnung des Flachstücks ist.

Gemäß eines weiteren Gegenstandes wird ein Batteriezellenmodul mit zumindest zwei zuvor beschriebenen Trägermatrizen vorgeschlagen, wobei jeweils eine Trägermatrix auf einer Seite eines Satzes aus zumindest zwei Spalten jeweils aus übereinander angeordneten Batterien angeordnet ist. Die jeweils im Wesentlichen in einer Ebene angeordneten Pole der Batterien werden mittels jeweils einer Trägermatrix und den entsprechenden Batteriezellenverbindern elektrisch miteinander verbunden. Das heißt, dass auf einer ersten Seite der Batterien eine erste Trägermatrix angeordnet wird, und auf einer zweiten Seite der Batterien eine zweite Trägermatrix. Mit Hilfe dieser beiden Trägermatrizen lassen sich alle Pole der in dem Satz angeordneten Batterien miteinander in Reihe schalten.

Ein weiterer Gegenstand ist ein Verfahren zur Herstellung eines Batteriezellenmoduls mit den Schritten Herstellen eines Trägers, Befestigen von Batteriezellenverbindern in der Horizontalaufnahme und der Vertikalaufnahme, Anpressen des Trägers mit den Batteriezellenverbindern an einen Satz Batterien, und stoffschlüssiges Verbinden der Batteriepole der Batterien mit den Batteriezellenverbindern.

Gemäß eines vorteilhaften Ausführungsbeispiels wird vorgeschlagen, dass die zumindest zwei Batterien durch den Batteriezellenverbinder elektrisch in Reihe geschaltet sind. Hierdurch kann die Ausgangsspannung eines Moduls entsprechend der Anzahl der in Reihe geschalteten Batterien erhöht werden.

Nachfolgend wird der Gegenstand anhand einer Ausführungsbeispiele zeigenden Zeichnung näher erläutert. In den Figuren zeigen:
- Fig. 1: eine erste Schnittansicht eines Batteriezellenverbinders;
- Fig. 2: eine erste Draufsicht eines Batteriezellenverbinders;
- Fig. 3: eine zweite Schnittansicht eines Batteriezellenverbinders;
- Fig. 4: eine dritte Schnittansicht eines Batteriezellenverbinders;
- Fig. 5: eine Seitenansicht einer Spalte mit fünf Batterien eines Batteriemoduls;
- Fig. 6: eine Draufsicht auf ein Batteriemodul mit fünf in einer Spalte verschalteten Batterien und zwei Spalten;
- Fig. 7: eine batterieseitige Ansicht einer Trägermatrix ohne Batteriezellenverbinder;
- Fig. 8: eine batterieseitige Ansicht einer Trägermatrix mit Batteriezellenverbinder;
- Fig. 9: eine batterieabgewandte Ansicht einer Trägermatrix ohne Batteriezellenverbinder;
- Fig. 10: eine batterieabgewandte Ansicht einer Trägermatrix mit Batteriezellenverbinder.

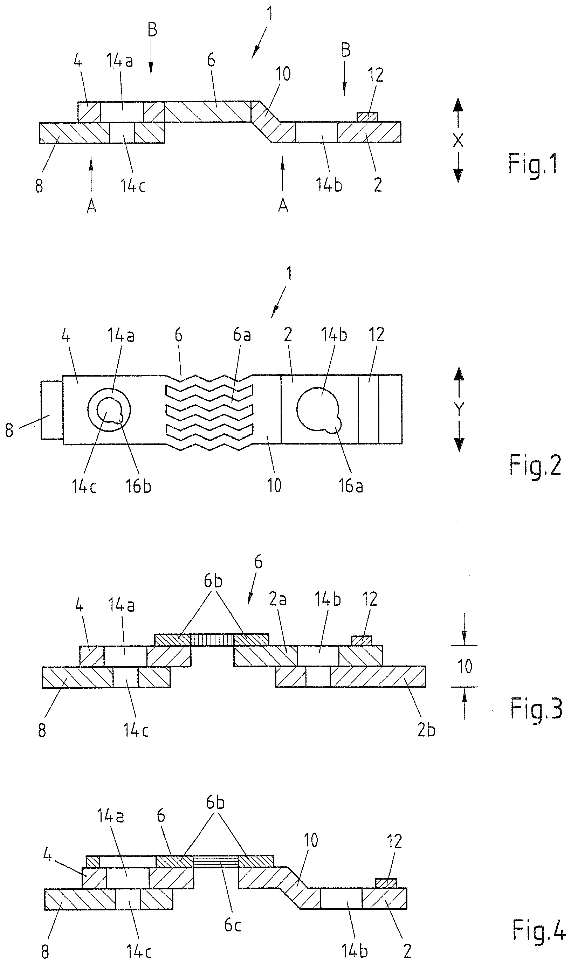

Fig. 1 zeigt eine Ansicht eines Batteriezellenverbinders 1 im Schnitt. Die Schnittansicht zeigt, dass der Batteriezellenverbinder 1 aus einem ersten Anschlussteil 2, einem zweiten Anschlussteil 4, einem Verbindungsteil 6 und einem an dem zweiten Anschlussteil 4 angeordneten Flachstück 8 gebildet ist.

In der Fig. 1 ist zu erkennen, dass das Verbindungsteil 6 in einer Ebene mit dem zweiten Anschlussteil 4 angeordnet ist. Das Verbindungsteil 6 kann einstückig mit dem zweiten Anschlussteil 4 und dem ersten Anschlussteil 2 geformt sein. Auch kann das Verbindungsteil 6 ein eigenes Bauteil sein und stoffschlüssig mit dem ersten Anschlussteil 2 und dem zweiten Anschlussteil 4 verbunden sein.

In dem ersten Anschlussteil 2 ist ein Versatz 10 angeordnet. Der Versatz 10 könnte jedoch auch im Verbindungsteil 6 als auch im zweiten Anschlussteil 4 angeordnet sein. Durch den Versatz 10 ist die einer Batterie zugewandte Seite A des ersten Anschlussteils 2 im Wesentlichen koplanar zu der der Batterie zugewandten Seite A eines Flachstücks 8.

Das Flachstück 8 ist auf der der Batterie zugewandten Seite A des zweiten Anschlussteils 4 mit dem zweiten Anschlussteil 4 stoffschlüssig verbunden.

Das erste Anschlussteil 2 und das Flachstück 8 sind bevorzugt aus unterschiedlichen elektrisch leitenden Materialien, insbesondere Metallen, geformt bzw. mit solchen Materialien oder Metallen beschichtet. Beispielsweise kann das erste Anschlussteil 2 aus Aluminium geformt sein und das Flachstück 8 aus Stahl. Es ist auch möglich, dass das erste Anschlussteil 2 mit einem anderen Metall als Aluminium, beispielsweise Zinn, Zink, Kupfer, Nickel, Eisen, Stahl, Silber, Gold oder dgl. beschichtet ist oder aus einem Vollmaterial geformt ist. Legierungen von den genannten Metallen sind ebenfalls möglich.

Das Flachstück 8 kann ebenfalls aus Stahl, Zinn, Zink, Kupfer, Aluminium, Nickel, Eisen, Silber, Gold oder dgl. oder Legierungen davon geformt sein oder mit diesen Metallen beschichtet sein.

In der Fig. 1 ist zu erkennen, dass das erste Anschlussteil 2 eine Entlüftungsöffnung 14b aufweist. Das zweite Anschlussteil 4 weist eine Entlüftungsöffnung 14a auf, und das Flachstück 8 weist eine Entlüftungsöffnung 14c auf. Die Entlüftungsöffnung 14c ist koaxial zur Entlüftungsöffnung 14a. Die Entlüftungsöffnung 14c kann beispielsweise einen gleichen Durchmesser wie die Entlüftungsöffnung 14b haben. Die Entlüftungsöffnung 14a kann beispielsweise einen größeren Durchmesser als die Entlüftungsöffnung 14c haben.

Zur Montage des Batteriezellenverbinders 1 an einer Batterie 20 wird an der der Batterie 20 abgewandten Seite B der Batteriezellenverbinder 1 gegen zwei hier nicht dargestellte Pole 22, 24, welche zueinander gegenpolig sind, von zwei verschiedenen Batterien 20 gedrückt. Hierbei kommt das erste Anschlussteil 2 in Kontakt mit einem ersten Pol 22 einer ersten Batterie 20 und das Flachstück 8 mit einem zum ersten Pol gegenpoligen zweiten Pol 24 einer zweiten Batterie 20. Sobald ein Kontakt hergestellt wurde, kann beispielsweise mittels eines Lasers durch die Entlüftungsöffnung 14b das erste Anschlussteil 2 stoffschlüssig mit dem ersten Batteriepol 22 verbunden werden. Hierbei wird entlang der Umfangsfläche der Entlüftungsöffnung 14b der Laserstrahl geführt, so dass eine stoffschlüssige Verbindung entsteht. Durch die Entlüftungsöffnung 14a und die Entlüftungsöffnung 14c kann das Flachstück 8 mittels eines Lasers stoffschlüssig mit dem zweiten Pol 24 der zweiten Batterie 20 verbunden werden. Sobald die Schweißnaht ausgekühlt bzw. hart ist, kann der Druck aufgehoben werden, und der Batteriezellenverbinder 1 ist stoffschlüssig mit den jeweiligen Polen 22, 24 der beiden Batterien 20 verbunden.

Um die Temperatur des Batteriezellenverbinders 1 und respektive der jeweiligen Batterien 20 in den Anschlussteilen 2, 4 überwachen zu können, ist ein Verbindungsbereich 12 auf der der Batterie 20 abgewandten Seite B des ersten Anschlussteils 2 angeordnet. Der Verbindungsbereich 12 kann jedoch auch an dem Verbindungsteil 6 als auch dem zweiten Anschlussteil 4 angeordnet sein. Der Verbindungsbereich 12 kann aus Kupfer, Silber, Gold, Zinn, Zink, Legierungen davon oder anderen Metallen gebildet sein. Auch kann der Verbindungsbereich 12 auf der Oberfläche des ersten Anschlussteils 2, dem Verbindungsteil 6 oder dem zweiten Anschlussteil 4 beschichtet sein oder mit dem ersten Anschlussteil 2 , dem Verbindungsteil 6 oder dem zweiten Anschlussteil 4 walzplattiert sein. Über den Verbindungsbereich 12 kann ein Abgriff zu einem integrierten Schaltkreis oder einer Platine 40 führen, an dem der Abgriff hinsichtlich seiner Temperatur überwachbar ist.

Der Verbindungsteil 6 ermöglicht es, die der Batterie 20 zugewandten Seiten A des ersten Anschlussteils 2 und des Flachstücks 8 relativ zueinander in Richtung X zu verschieben. Hierdurch kann beim stoffschlüssigen Verbinden des Batteriezellenverbinders 1 mit den hier nicht dargestellten Batterien 20 ein Toleranzausgleich in einem Toleranzbereich 26 erfolgen. Somit ist es möglich, dass Toleranzen in der Lage der Batteriepole 22, 24 ausgeglichen werden und trotzdem eine stoffschlüssige Verbindung zwischen erstem Anschlussteil 2 und Batteriepol 22, 24 bzw. Flachstück 8 und Batteriepol 22, 24 mittels eines Schweißverfahrens möglich ist.

Fig. 2 zeigt eine Draufsicht auf eine weitere Alternative eines Batteriezellenverbinders 1. Gleiche Bezugszeichen zeigen in den Figuren jeweils gleichartige Elemente. In der Fig. 2 ist zu erkennen, dass der Verbindungsteil 6 aus einander beabstandeten Rippen 6a geformt ist. Wie zu erkennen ist, sind die Rippen wellenförmig. In der Fig. 2 verlaufen die Rippen in der Ebene des zweiten Anschlussteils 4. Es ist jedoch auch möglich, dass die Rippen aus der Ebene des zweiten Anschlussteils 4 herausragen. Mittels der Rippen 6a ist es möglich, dass das erste Anschlussteil 2 relativ gegenüber dem Flachstück 8 bzw. dem zweiten Anschlussteil 4 in Richtung Y verschiebbar ist, um ebenfalls einen Toleranzausgleich zu erzielen. In der Fig. 2 ist zu erkennen, dass das erste Anschlussteil 2 die Entlüftungsöffnung 14b aufweist. In der Entlüftungsöffnung 14b ist der aus dem Umfang der Entlüftungsöffnung 14b hervorstehende Vorsprung 16a dargestellt.

Eine entsprechende, vorzugsweise gleich große Entlüftungsöffnung 14c mit einem Versatz 16b ist in dem Flachstück 8 geformt, wie ebenfalls in der Fig. 2 zu erkennen ist. Koaxial zu der Entlüftungsöffnung 14c ist eine Entlüftungsöffnung 14a in dem ersten Anschlussteil 4 gebildet, dessen Durchmesser größer als der Durchmesser der Entlüftungsöffnung 14c ist.

Fig. 3 zeigt eine Schnittansicht mit einer weiteren Alternative. In der Fig. 3 ist zu erkennen, dass der Versatz 10 durch ein zweistückig geformtes erstes Anschlussteil 2 mit den Teilen 2a und 2b geformt ist. Diese Teile können stoffschlüssig miteinander verbunden sein und aus demselben Metall geformt sein oder aus unterschiedlichen Metallen. Ferner ist in der Fig. 2 zu erkennen, dass der Verbindungsteil 6 aus einem Geflecht geformt ist. Dies kann ein Aluminium- oder Kupfergeflecht sein. Geflechte aus anderen Metallen sind ebenfalls möglich. Zu erkennen ist auch, dass das Verbindungsteil 6 zwei kompaktierte Bereiche 6b aufweist, welche jeweils im Bereich des ersten Anschlussteils 2 und des zweiten Anschlussteils 4 vorgesehen sind. An den kompaktierten Bereichen 6b kann das Verbindungsteil 6 stoffschlüssig jeweils mit dem ersten Anschlussteil 2 und dem zweiten Anschlussteil 4 verbunden werden. Hierzu kann beispielsweise ein Reibschweißen, ein Widerstandsschweißen, ein Ultraschallschweißen, oder ein sonstiges Schweißverfahren, oder ein sonstiges Verbindungsverfahren zum Einsatz kommen.

Fig. 4 zeigt ein weiteres Ausführungsbeispiel. Bei dem in Fig. 4 gezeigten Ausführungsbeispiel ist das Verbindungsteil 6 aus Folien 6c geformt, welche ebenfalls kompaktierte Bereiche 6b aufweisen. Der kompaktierte Bereich 6b im Bereich des zweiten Verbindungsteils 4 ragt über die Entlüftungsöffnung 14a hinaus. Im Bereich der Entlüftungsöffnung 14a und im Bereich des Endes des Abstands zwischen erstem Anschlussteil 2 und zweitem Anschlussteil 4 kann das Verbindungsteil 6 mit dem zweiten Anschlussteil 4 stoffschlüssig verbunden sein. Das Verbindungsteil 6 kann ebenfalls mit dem ersten Anschlussteil 2 stoffschlüssig verbunden sein. Dadurch, dass der kompaktierte Bereich 6b des Verbindungsteils 6 im Wesentlichen über einen Großteil der Fläche des zweiten Anschlussteils 4 ragt, ergibt sich eine große Kontaktfläche und somit ein geringer Übergangswiderstand. Der zweite kompaktierte Bereich 6b kann auch entlang des Versatzes 10 bis zum Verbindungsbereich 12 sich über den ersten Anschlussteil 2 erstrecken und ebenfalls eine Öffnung im Bereich der Entlüftungsöffnung 14b aufweisen.

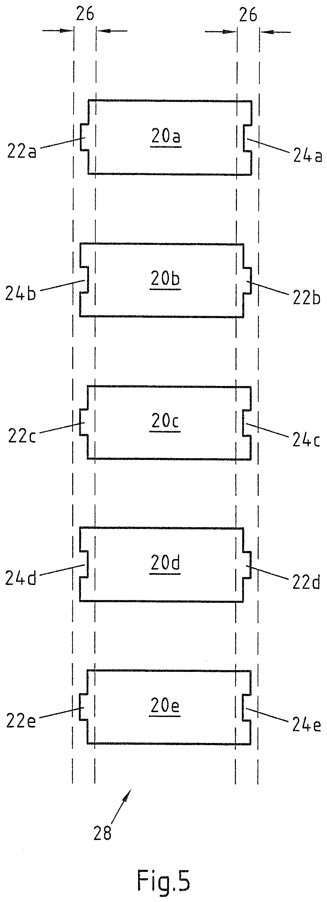

Fig. 5 zeigt eine schematische Seitenansicht einer ersten Spalte 28 aus fünf Batterien 20 a-e mit jeweils einem ersten Pol 22 a-e und jeweils einem zweiten Pol 24 a-e. Zu erkennen ist, dass die Batterien 20a-e in Spalte 28 übereinander angeordnet sind. Ferner ist zu erkennen, dass die Pole 22, 24 alternierend angeordnet sind. Das heißt, dass beispielsweise ein Pluspol 22a der Batterie 20a in einer Ebene mit einem Minuspol 24b einer Batterie 20b angeordnet ist. Darauf folgt wieder ein Pluspol 22c, auf den ein Minuspol 24d und erneut ein Pluspol 22e folgt.

Ferner ist zu erkennen, dass die Pole 22, 24 der Batterien 20 in einem Toleranzbereich 26, der vorliegend vergrößert dargestellt ist, angeordnet sind. Der Toleranzbereich 26 gibt an, innerhalb welchen Bereiches die Pole angeordnet sein können. Die Läge 21 der jeweiligen Batterien, d.h. der Abstand der Pole 22, 24 zueinander, ist toleranzbehaftet. Daraus folgt, dass die Pole 22, 24 nicht stets koplanar sind, so dass bei einem Verbinden mit einem Batteriezellenverbinder 1 diese Toleranz ausgeglichen werden muss.

Der Übersichtlichkeit halber ist in der Fig. 5 die Spalte 28 ohne die Batteriezellenverbinder dargestellt. Ein erster Batteriezellenverbinder 1a wäre beispielsweise zwischen dem Pluspol 22a und dem Minuspol 24b angeordnet. Danach wäre der Pluspol 22b mit einem Batteriezellenverbinder 1 mit einem Minuspol 24c verbunden. Der Pluspol 22c wäre über einen Batteriezellenverbinder mit dem Minuspol 24d verbunden. Der Pluspol 22d wäre über einen Batteriezellenverbinder 1 mit dem Minuspol 24e verbunden. Der Pluspol 22e wäre mit einem Batteriezellenverbinder mit einem Minuspol einer Batterie einer weiteren Spalte 28 verbunden. Die Batteriezellenverbinder 1 entlang einer Spalte 28 wären vertikal angeordnet, und ein Batteriezellenverbinder 1 der zwei Spalten 28 miteinander verbindet, wäre horizontal angeordnet.

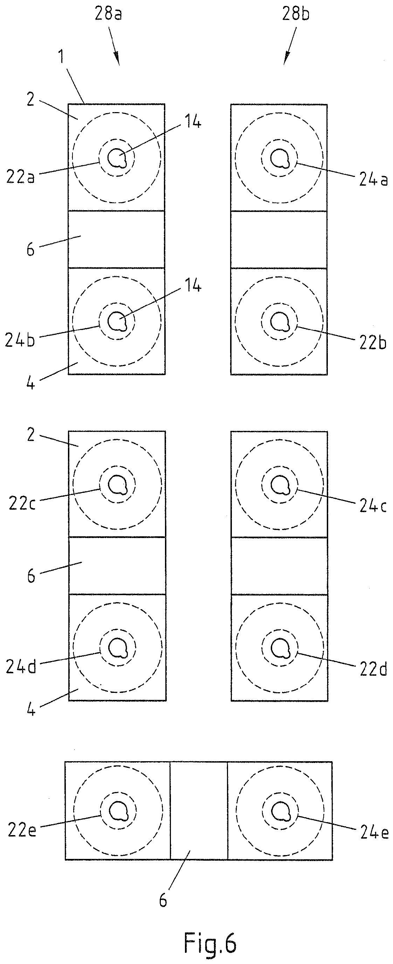

Eine solche Anordnung ist beispielsweise in der Fig. 6 zu erkennen. Fig. 6 zeigt zwei Spalten 28a, 28b nebeneinander. Hier ist zu erkennen, dass die Batteriezellenverbinder 1 jeweils Pluspol 22a mit Minuspol 24b, Pluspol 22c mit Minuspol 24d verbinden. Die Spalte 28a ist über den Pluspol 22e und einem Batteriezellenverbinder 1 mit dem Minuspol 24e der Spalte 28b verbunden.

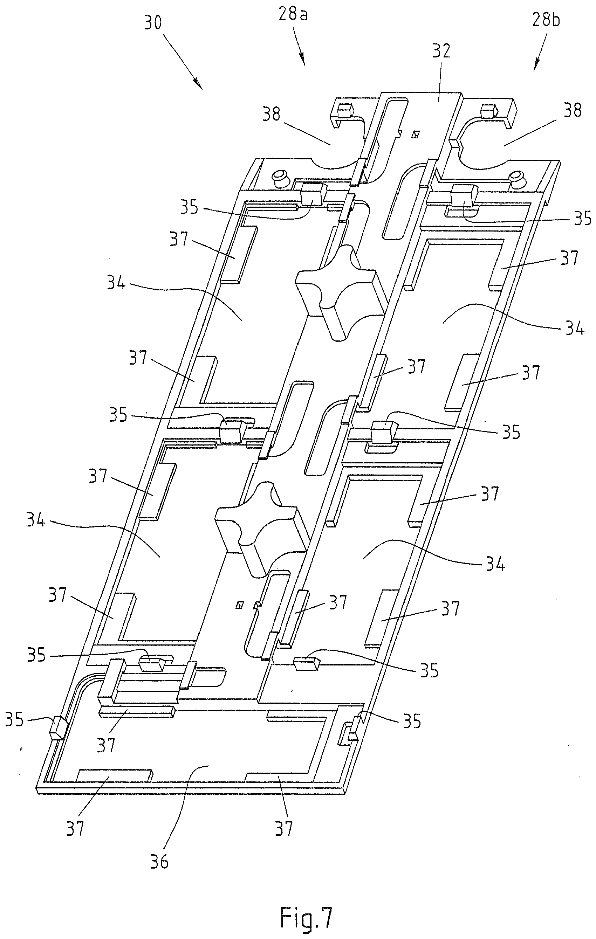

Fig. 7 zeigt eine Trägermatrix 30 mit einem Träger 32. Zu erkennen ist, dass der Träger 32 Aufnahmen 34, 36 aufweist, in die jeweils ein Batteriezellenverbinder 1 eingesteckt werden können. Die Aufnahmen 34 sind Vertikalaufnahmen. Der dargestellte Träger 32 weist zwei Spalten mit jeweils zwei Vertikalaufnahmen 34 auf. Darüber hinaus ist an dem unteren Ende des Trägers 32 eine Horizontalaufnahme 36 vorgesehen. An dem oberen Ende des Trägers 32 sind zwei Schwertaufnahmen 38 vorgesehen.

Darüber hinaus ist auf der in Fig. 7 dargestellten der Batterie zugewandten Seite zu erkennen, dass Rastnasen 35 an dem Träger 32 angeordnet sind. Die Rastnasen 35 sind an den Rändern der Aufnahmen 34, 36 angeordnet und erlauben ein Einrasten von Batteriezellenverbindern 1 in den Aufnahmen 34, 26.

Ferner sind Halteschultern 37 zu erkennen. Zu erkennen ist, dass die Halteschultern 37 aus der Oberfläche des Trägers 32 zurückspringen und an der der Batterie abgewandten Seite des Trägers angeordnet sind.

Im oberen Bereich des Trägers 32 sind Schwertaufnahmen 38 vorgesehen. Die Schwertaufnahmen 38 weisen Ausnahmen zur Aufnahme von Schwertern 40 auf, die aus der Fläche des Trägers 32 herausragen. Auf der der Batterie zugewandten Seite des Trägers 32 sind in den Schwertaufnahmen 38 Kontaktelemente zur Kontaktierung mit Batteriepolen vorgesehen. Die Kontaktelemente sind aus unterschiedlichen Metallen geformt, um eine sortenreine Verbindung mit Batteriepolen unterschiedlicher Polarität zu gewährleisten. An den Schwertern 40 können Stecker 42 angeordnet werden.

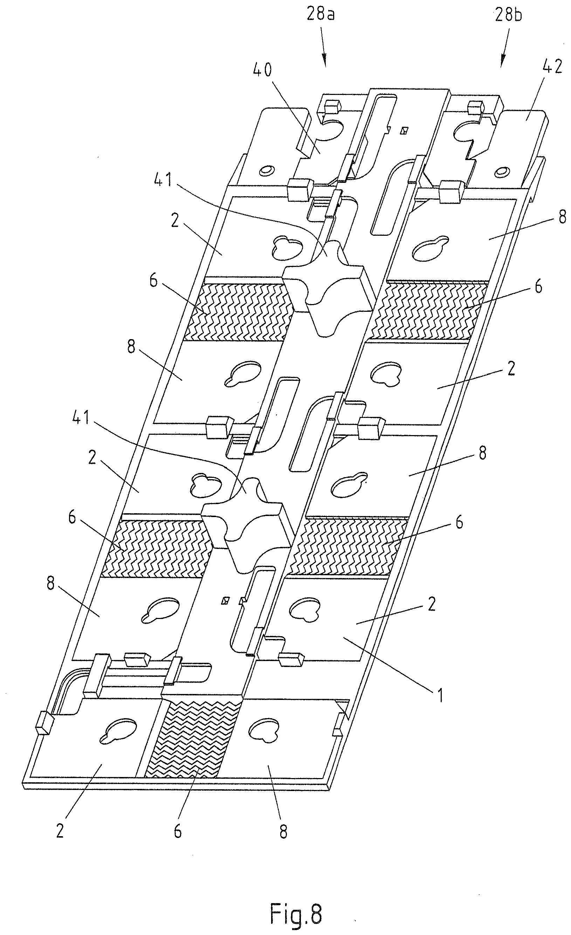

Auf der in Fig. 8 dargestellten Seite des Trägers 32 ist zu erkennen, dass die Batteriezellenverbinder 1 formschlüssig mit der Oberfläche des Trägers 32 in die Rastnasen 35 eingerastet sind. Insbesondere ist der Batteriezellenverbinder 1 mit dem Flachstück 8 in die Vertikalaufnahme 34 eingesteckt. Das Flachstück 8 ist flächenbündig mit der dargestellten Fläche des Trägers 32. Das erste Anschlussteil 2 des Batteriezellenverbinders 1 ist in der Vertikalaufnahme 34 angeordnet. Das erste Anschlussteil 2 ist flächenbündig mit der dargestellten Seite des Trägers 32.

Die Batteriezellenverbinder 1 sind derart in einer Spalte angeordnet, dass in einer Spalte in einer ersten Aufnahme 34 zunächst das Anschlussteil 2, dann das Verbindungsteil 6 und anschließend das Flachstück 8 eines ersten Batteriezellenverbinders 1 angeordnet ist und in einer zweiten daneben angeordneten zweiten Aufnahme 34 erneut das Anschlussteil 2, dann das Verbindungsteil 6 und anschließend das Flachstück 8 eines zweiten Batteriezellenverbinders 1 angeordnet ist.

Ferner ist zu erkennen, dass die Vertikalaufnahme 34 als auch die Horizontalaufnahme 36 derart geformt ist, dass in einem Bereich das Flachstück 8 zusammen mit dem zweiten Anschlussteil 2 aufnehmbar ist, und in einem zweiten Bereich das erste Anschlussteil aufnehmbar ist, wobei die Aufnahmen 34, 36 auch das Verbindungsteil 6 aufnehmen.

Im Mittelsteg des Trägers 32 sind Führungen 41 zu erkennen. Diese Führungen 41 ermöglichen eine positionsgenaue Ausrichtung von Batterien an die Batteriezellenverbinder 1.

An der in Fig. 8 dargestellten Seite des Trägers 32 kann auch eine Führungsmatrix angeschlossen werden. Diese kann aus Führungen für Batterien gebildet sein.

Mittels der Führungen können die Batterien konzentrisch an die Entlüftungsöffnungen in den Batteriezellenverbindern herangeführt werden.

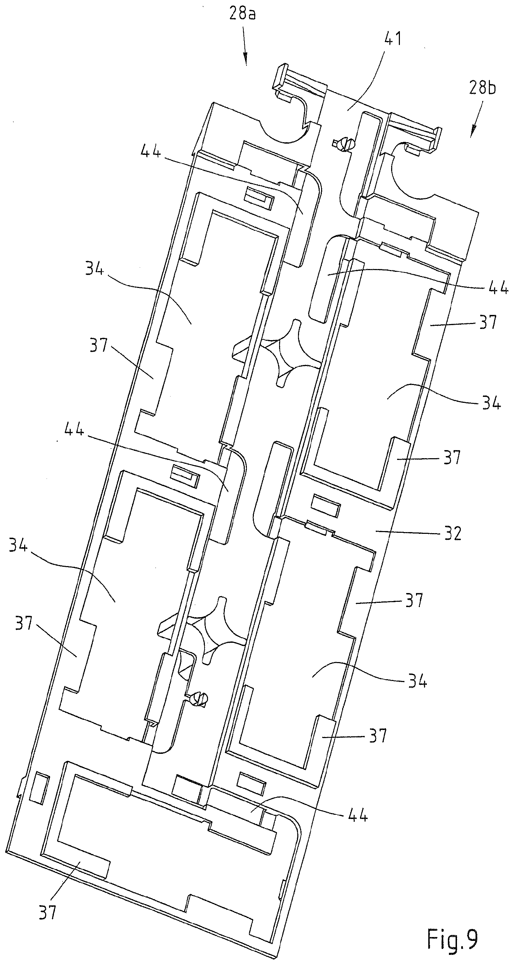

Fig. 9 zeigt die der Batterie abgewandet Seite des Trägers 32. Erneut sind die Halteschultern 37 zu erkennen. Darüber hinaus ist zwischen den Spalten aus Vertikalaufnahmen 34 eine Leiterplattenaufnahme 40 vorgesehen, in die eine Leiterplatte einsteckbar ist.

Ferner ist zu erkennen, dass im Bereich der Verbindungsbereiche 12 Ausnehmungen 44 vorgesehen sind, über die die Temperaturen der Batteriezellenverbinder abgreifbar sind.

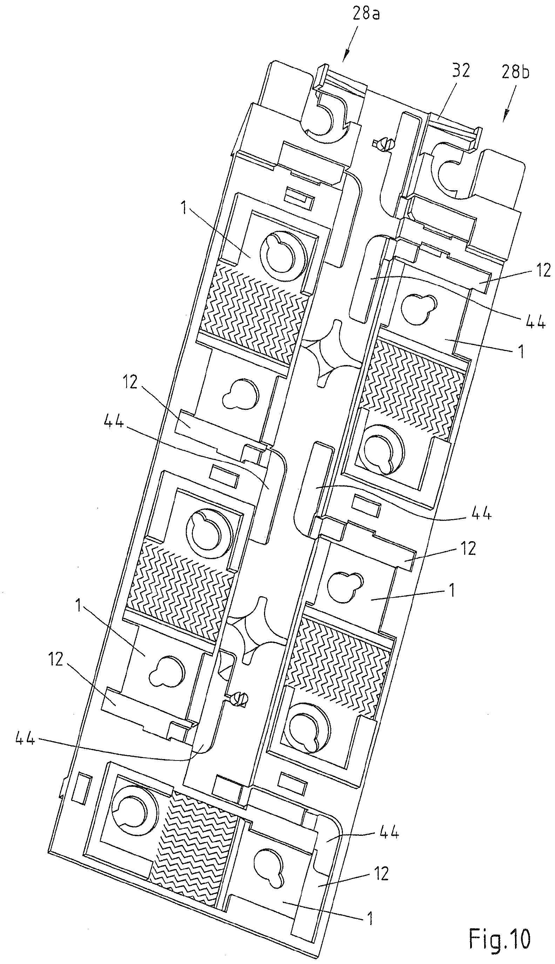

Fig. 10 zeigt den Träger 32 mit eingesteckten Batteriezellenverbindern 1 von der der Batterie abgewandten Seite.

Zur Herstellung eines Batteriemoduls aus beispielsweise zwölf Batterien werden jeweils sechs Batterien in Spalten zusammen an den Träger 32 herangeführt. Die Batteriepole 22, 24 werden konzentrisch zu den Entlüftungsöffnungen 14 der Batteriezellenverbinder 1 durch die Führungen 41 ausgerichtet. Mittels eines Werkzeugs wird der Träger 32 samt der Batteriezellenverbinder 1 gegen die Batteriepole 22, 24 gedrückt. Dadurch, dass die Batteriezellenverbinder 1 flexibel sind, lässt sich ein Toleranzausgleich im Bereich der Batteriepole 22, 24 realisieren. Darüber hinaus ist eine sortenreine Kontaktierung der Batteriepole möglich, da die Flachstücke 8 aus einem anderen Material gebildet sein können als die ersten Anschlussteile 2. Nachdem der Träger 32 samt Batteriezellenverbinder 1 gegen die Batteriepole 22, 24 gedrückt wurde, liegen diese mechanisch an den Batteriepolen an. Ferner liegen die Kontaktbereiche der Schwerter 40 an den oberen Batterien des Batteriemoduls an. Mittels eines Laserschweißwerkzeugs werden entlang der Umfangsflächen der Entlüftungsöffnungen 14 die Batteriepole mit den Batteriezellenverbindern verschweißt.

Auf einer gegenüberliegenden Seite des Satzes aus zwölf Batterien ist die Trägermatrix komplementär geformt. Das bedeutet, dass drei Vertikalaufnahmen 34 vorgesehen sind und keine Horizontalaufnahmen 36 als auch keine Schwertaufnahmen 38. Der Strom fließt somit durch alle Batterien in Serie, und die Spannung über alle Batterien ist an den Schwertern 40 abgreifbar.

Mittels der gegenständlichen Trägermatrix ist eine automatisierte Herstellung von Batteriemodulen aus einer Mehrzahl von Batterien möglich.

## Patentansprüche

1. Trägermatrix für Batteriezellenverbinder (1) mit
- einem aus einem nicht leitenden Material gebildeten Träger,
- zumindest einer in einer Spalte zur Aufnahme eines Batteriezellenverbinders (1) geformten ersten Aufnahme (34), wobei die erste Aufnahme (34) derart gebildet ist, dass der zwei in der Spalte übereinander angeordnete Batterien verbindende Batteriezellenverbinder (1) in die erste Aufnahme (34) entlang einer ersten Richtung einsteckbar ist,
- zumindest zwei in einer zweiten Richtung nebeneinander angeordneten Spalten, und
- einer zur Aufnahme eines in zwei Spalten nebeneinander angeordnete Batterien verbindenden Batteriezellenverbinders (1) geformten zweiten Aufnahme, wobei die zweite Aufnahme derart gebildet ist, dass der Batteriezellenverbinder (1) entlang der zweiten Richtung in die zweite Aufnahme einsteckbar ist und die zweite Richtung im Wesentlichen normal zur ersten Richtung ist.

2. Trägermatrix nach Anspruch 1, **dadurch gekennzeichnet, dass** in dem Träger (32) zwischen den Spalten eine Leiterplattenaufnahme (40) für eine Leiterplatte geformt ist.

3. Trägermatrix nach Anspruch 1, **dadurch gekennzeichnet, dass** die zweite Aufnahme (36) und/oder die erste Aufnahme (34) zur flächenbündigen Aufnahme eines Batteriezellenverbinders (1) geformt sind.

4. Trägermatrix nach Anspruch 1, **dadurch gekennzeichnet, dass** die zweite Aufnahme (36) und/oder die erste Aufnahme (34) derart geformt sind, dass auf einer einer Batterie zugewandten Seite des Trägers (32) ein Batteriezellenverbinder (1) mit einem Flachstück (8) und einem ersten Anschlussteil (2) flächenbündig mit dem Träger (32) ist.

5. Trägermatrix nach Anspruch 1, **dadurch gekennzeichnet, dass** die zweite Aufnahme (36) und/oder die erste Aufnahme (34) Rastnasen (35) zur formschlüssigen Befestigung der Batteriezellenverbinder (1) aufweisen.

6. Trägermatrix nach Anspruch 5, **dadurch gekennzeichnet, dass** die zweite Aufnahme (36) und/oder die erste Aufnahme (34) auf den den Rastnasen (35) abgewandten Seiten Halteschultern (37) als Gegenlager zur Aufnahme des Batteriezellenverbinders (1) aufweisen.

7. Trägermatrix nach Anspruch 1, **dadurch gekennzeichnet, dass** der Träger (32) aus Polyamid gebildet ist.

8. Trägermatrix nach Anspruch 2, **dadurch gekennzeichnet, dass** der Träger (32) Ausnehmungen (44) zwischen der zweiten Aufnahme (36) und/oder der ersten Aufnahme (34) und der Leiterplattenaufnahme im Bereich von Verbindungsbereichen (12) der Batteriezellenverbinder (1) aufweist.

9. Trägermatrix nach Anspruch 8, **dadurch gekennzeichnet, dass** in den Ausnehmungen (44) elektrische Verbindungsleiter zwischen der Leiterplatte und dem Verbindungsbereichen (12) geführt sind.

10. Trägermatrix nach Anspruch 1, **dadurch gekennzeichnet, dass** in dem Träger (32) zwei horizontal nebeneinander angeordnete Schwertaufnahmen (38) auf der der zweiten Aufnahme (36) gegenüberliegenden Seite des Trägers (32) angeordnet sind.

11. Trägermatrix nach Anspruch 10, **dadurch gekennzeichnet, dass** die Schwertaufnahmen (38) Ausnehmungen zum Aufnehmen von aus der Fläche des Trägers (32) herausragenden Schwertern aufweisen.

12. Trägermatrix nach Anspruch 1, **dadurch gekennzeichnet, dass** auf der den Batterien zugewandten Seite zwei Führungen (41) an dem Träger (32) befestigt sind.

13. Trägermatrix nach Anspruch 12, **dadurch gekennzeichnet, dass** die Führungen (41) zumindest teilweise zylindrische Mantelflächen aufweisen.

14. Trägermatrix nach Anspruch 12, **dadurch gekennzeichnet, dass** die Führungen (41) einstückig sind und mit dem Träger (32) formschlüssig verbindbar sind.

15. Trägermatrix nach Anspruch 1, **dadurch gekennzeichnet, dass** jeweils zwei in nebeneinander angeordneten Spalten (28a, 28b) angeordnete erste Aufnahmen (34) derart geformt sind, dass ein oberer Bereich einer ersten Aufnahme (34) zur Aufnahme eines Anschlussteils geformt ist und ein unterer Bereich der ersten Aufnahme (34) zur Aufnahme eines Flachstücks geformt ist und ein oberer Bereich einer weiteren ersten Aufnahme (34) zur Aufnahme eines Flachstücks geformt ist und ein unterer Bereich der weiteren ersten Aufnahme (34) zur Aufnahme eines Anschlussteils geformt ist.

16. Batteriezellenmodul mit zumindest einer Trägermatrix nach Anspruch 1, wobei eine Trägermatrix auf einer ersten Seite eines Satzes aus zumindest zwei Spalten jeweils aus übereinander angeordneten Batterien angeordnet ist und eine zweite ausschließlich erste Aufnahmen aufweisende Trägermatrix auf der zweiten Seite des Satzes angeordnet ist.

17. Verfahren zur Herstellung eines Batteriezellenmoduls nach Anspruch 16 mit den Schritten,
- Herstellen eines Trägers,
- Befestigen von Batteriezellenverbindern in der zweiten Aufnahme (36) und der ersten Aufnahme (34), wobei die zweite Aufnahme (36) und die erste Aufnahme (34) derart gebildet sind, dass die Batteriezellenverbinder (1) in die zweite Aufnahme (36) und die erste Aufnahme (34) einsteckbar sind,
- Anpressen des Trägers mit den Batteriezellenverbindern an einen Satz Batterien, und
- stoffschlüssiges Verbinden der Batteriepole der Batterien mit den Batteriezellenverbindern.

## Claims

1. Carrier matrix for battery cell connectors (1), comprising
- a carrier formed from a non-conductive material,
- at least one first receiver (34) formed in a column to receive a battery cell connector (1), wherein the first receiver (34) is formed such that the battery cell connector (1) which connects two batteries arranged above each other in the columns can be plugged into the receiver (34) along a first direction,
- at least two columns arranged next to one another in a second direction, and
- a second receiver formed to receive a battery cell connector (1) connecting batteries arranged next to one another in two columns, wherein the second receiver is formed such that the battery cell connector (1) can be plugged into the second receiver along the second direction, and the second direction is substantially perpendicular to the first direction.

2. Carrier matrix of claim 1, wherein a printed circuit board receiver (40) for a printed circuit board is formed in the carrier (32) between the columns.

3. Carrier matrix of claim 1, wherein the second receiver (36) and/or the first receiver (34) are formed to receive in a flush manner a battery cell connector (1).

4. Carrier matrix of claim 1, wherein the second receiver (36) and/or the first receiver (34) are formed in such a way that, on a side of the carrier facing a battery, a battery cell connector (1) with a flat piece (18) and a first connecting part (2) is flush with the carrier (32).

5. Carrier matrix of claim 1, wherein the second receiver (36) and/or the first receiver (34) have latching noses (35) for the positive fastening of the battery cell connectors (1).

6. Carrier matrix of claim 1, wherein the second receiver (36) and/or the first receiver (34) have, on the sides opposite to the latching noses (35), holding shoulders (37) as counter bearings to receive the battery cell connector (1).

7. Carrier matrix of claim 1, wherein the carrier (32) is formed from polyamide.

8. Carrier matrix of claim 1, wherein the carrier (32) has recesses (44) between the second receiver (36) and/or the first receiver (34) and the printed circuit board receiver in the region of connecting regions (12) of the battery cell connectors.

9. Carrier matrix of claim 1, wherein electric connecting leads are guided between the printed circuit board and the connecting regions (12) in the recesses (44).

10. Carrier matrix of claim 1, wherein two strut receivers (38) arranged next to one another horizontally on the side of the carrier (32) opposing the second receiver (36) are arranged in the carrier (32).

11. Carrier matrix of claim 1, wherein the strut receivers (38) have recesses to receive struts projecting from the face of the carrier (32).

12. Carrier matrix of claim 1, wherein two guides (41) are fastened to the carrier (32) on the side facing the batteries.

13. Carrier matrix of claim 1, wherein the guides (41) have at least partially cylindrical lateral surfaces.

14. Carrier matrix of claim 1, wherein the guides (41) are one-piece and can be positively connected to the carrier (32).

15. Carrier matrix of claim 1, wherein two first receivers (34) arranged in columns (28a,28b)arranged next to one another respectively are formed in such a way that an upper region of a first receiver (34) is formed to receive a connecting part and a lower region of the first receiver (34) is formed to receive a flat piece and an upper region of a further first receiver (34) is formed to receive a flat piece and a lower region of the further first receiver (34) is formed to receive a connecting part.

16. Battery cell module with at least one carrier matrix according to claim 1, wherein a carrier matrix is arranged on a first side of a set of at least two columns of batteries arranged one above the other respectively and a second carrier matrix having exclusively vertical receivers is arranged on the second side of the set.

17. Method for producing a battery cell module according to claim 16, comprising the steps,
- producing a carrier,
- fastening battery cell connectors in the second receiver (36) and the first receiver (34), wherein the second receiver (36) and the first receiver (34) are formed such that the battery cell connectors (1) can be plugged into the second receiver (36) and the first receiver (34),
- pressing the carrier with the battery cell connectors onto a set of batteries, and
- connecting the battery poles of the batteries to the battery cell connectors by material-bonding.

## Revendications

1. Matrice de support pour un connecteur d'éléments de batteries (1), ladite matrice comprenant
- un support formé par un matériau non conducteur,
- au moins un premier logement (34) formé dans une colonne servant au logement d'un connecteur d'éléments de batteries (1), où le premier logement (34) est formé de manière telle, que le connecteur d'éléments de batteries (1) reliant deux batteries disposées l'une au-dessus de l'autre dans la colonne puisse être emboîté dans le premier logement (34) le long d'une première direction,
- au moins deux colonnes disposées l'une à côté de l'autre, dans une deuxième direction, et
- un deuxième logement formé pour le logement d'un connecteur d'éléments de batteries (1) reliant des batteries disposées les unes à côté des autres dans deux colonnes, où le deuxième logement est formé de manière telle, que le connecteur d'éléments de batteries (1) puisse être emboîté dans le deuxième logement le long de la deuxième direction, et la deuxième direction est pratiquement normale à la première direction.

2. Matrice de support selon la revendication 1, **caractérisée en ce qu'**un logement de plaquettes de circuits imprimés (40) prévu pour une plaquette de circuits imprimés est formé dans le support (32), entre les colonnes.

3. Matrice de support selon la revendication 1, **caractérisée en ce que** le deuxième logement (36) et/ou le premier logement (34) sont formés pour servir de logement, à surface affleurante, d'un connecteur d'éléments de batteries (1).

4. Matrice de support selon la revendication 1, **caractérisée en ce que** le deuxième logement (36) et/ou le premier logement (34) sont formés de manière telle, que, sur un côté du support (32), tourné vers une batterie, un connecteur d'éléments de batteries (1) comportant une pièce plate (8) et une première pièce de connexion (2) soit disposé en étant à fleur avec le support (32).

5. Matrice de support selon la revendication 1, **caractérisée en ce que** le deuxième logement (32) et/ou le premier logement (34) présentent des ergots d'encliquetage (35) servant à la fixation, par complémentarité de forme, des connecteurs d'éléments de batteries (1).

6. Matrice de support selon la revendication 5, **caractérisée en ce que** le deuxième logement (36) et/ou le premier logement (34) présentent, sur les côtés opposés aux ergots d'encliquetage (35), des épaulements de retenue (37) servant de paliers d'appui pour le logement du connecteur d'éléments de batteries (1).

7. Matrice de support selon la revendication 1, **caractérisée en ce que** le support (32) est formé en étant composé de polyamide.

8. Matrice de support selon la revendication 2, **caractérisée en ce que** le support (32) présente, dans le secteur de zones d'assemblage (12) des connecteurs d'éléments de batteries (1), des creux (44) formés entre le deuxième logement (36) et/ou le premier logement (34), et le logement des plaquettes de circuits imprimés.

9. Matrice de support selon la revendication 8, **caractérisée en ce que** des conducteurs de connexion électrique sont guidés, dans les creux (44), entre la plaquette de circuits imprimés et les zones d'assemblage (12).

10. Matrice de support selon la revendication 1, **caractérisée en ce que** deux logements en forme d'épée (38) agencés horizontalement l'un à côté de l'autre sont disposés, dans le support (32), sur le côté du support (32) placé à l'opposé du deuxième logement (36).

11. Matrice de support selon la revendication 10, **caractérisée en ce que** les logements en forme d'épée (38) présentent des creux servant au logement d'éléments ensiformes dépassant de la surface du support (32).

12. Matrice de support selon la revendication 1, **caractérisée en ce que** deux guidages (41) sont fixés sur le support (32), sur le côté tourné vers les batteries.

13. Matrice de support selon la revendication 12, **caractérisée en ce que** les guidages (41) présentent des surfaces latérales au moins partiellement cylindriques.

14. Matrice de support selon la revendication 12, **caractérisée en ce que** les guidages (41) sont d'un seul tenant et peuvent être assemblés, par complémentarité de forme, avec le support (32).

15. Matrice de support selon la revendication 1, **caractérisée en ce qu'**à chaque fois deux premiers logements (34) agencés dans des colonnes (28a, 28b) disposées l'une à côté de l'autre sont formés de telle manière, qu'une zone supérieure d'un premier logement (34) est formée pour le logement d'une pièce de connexion, et une zone inférieure du premier logement (34) est formée pour le logement d'une pièce plate, et une zone supérieure d'un autre premier logement (34) est formée pour le logement d'une pièce plate, et une zone inférieure de l'autre premier logement (34) est formée pour le logement d'une pièce de connexion.

16. Module d'éléments de batteries comprenant au moins une matrice de support selon la revendication 1, où une matrice de support est agencée sur un premier côté d'un ensemble se composant au moins de deux colonnes constituées à chaque fois de batteries disposées les unes au-dessus des autres, et une deuxième matrice de support présentant exclusivement des premiers logements est agencée sur le second côté de l'ensemble de colonnes.

17. Procédé de fabrication d'un module d'éléments de batteries selon la revendication 16, comprenant les étapes consistant
- à fabriquer un support,
- à fixer des connecteurs d'éléments de batterie dans le deuxième logement (36) et dans le premier logement (34), où le deuxième logement (36) et le premier logement (34) sont formés de manière telle, que les connecteurs d'éléments de batteries (1) puissent être emboîtés dans le deuxième logement (36) et dans le premier logement (34),
- à presser le support comprenant les connecteurs d'éléments de batteries, sur un jeu de batteries, et
- à assembler, par continuité de matière, les bornes des batteries avec les connecteurs d'éléments de batteries.
